# EUROPÄISCHE PATENTANMELDUNG

(11) **EP 2 520 445 A1**
(43) Veröffentlichungstag der Anmeldung: **07.11.2012**
(21) Anmeldenummer: 12155732.6
(22) Anmeldetag: 16.02.2012
(51) Int. Cl.: B60B 27/00, B21K 1/12, B21K 1/40

(54) **Achszapfen und Verfahren zu seiner Herstellung**

(30) Priorität: 06.05.2011 DE 102011050175
(71) Anmelder: Falkenroth Umformtechnik GmbH, 58579 Schalksmühle (DE)
(72) Erfinder: Wirfler, Rolf, 45889 Gelsenkirchen (DE)
(74) Vertreter: Neidl-Stippler, Cornelia

(57) **Zusammenfassung**

Die Erfindung betrifft ein Verfahren zur Herstellung eines zumindest teilweise hohlen geschmiedeten Achszapfens, mit Einbringen eines gewichtsoptimierten Metall-Vormaterials in ein geschlossenes Schmiedegesenk mit Gesenkgravur mit Werkzeugbüchse und Verschmiededorn; Ausschmieden des Metall-Vormaterials zu einem Achszapfenrohling mit aufgeweiteter Kalotte auf der Radseite des Achszapfens, und nachfolgendes Nach-Dornen entlang der Mittelachse des Achszapfens unter Herstellung einer zentrierten Vertiefung entsprechend der Dornlänge und -form im Achszapfeninneren, sowie einen danach hergestellten geschmiedeten einteiligen Achszapfen.

## Beschreibung

Die Erfindung betrifft ein Verfahren zur Herstellung eines zumindest teilweise hohlen Achszapfens.

Bei einer Achse mit abgesetzten oder reduzierten Achsenenden, auf der rotierende Bauteile befestigt sind, werden die abgesetzten Enden Achszapfen genannt. Der Absatz dient zur seitlichen Fixierung der Achse. Auf den Achszapfen werden Wälz- oder Gleitlager befestigt, die dann selbst jeweils in einem Lagerbock gefasst sind, oder die Achszapfen bilden selbst die innere Lauffläche eines Lagers.

Die Verbindung zwischen Rad und Achse wird von der Radaufhängung mit einer angestellten Radlagereinheit hergestellt, wobei das Rad meist über eine Radnabe und ein Wälzlager auf einem am Radträger angeordneten Achszapfen montiert ist. Der Achszapfen selbst und dessen Anbindung an den Radträger sind den über das Rad eingeleiteten zum Teil extremen Belastungen im Fahrbertrieb unmittelbar ausgesetzt und müssen deshalb zuverlässig ausgelegt und mit einer besonders hohen Qualität gefertigt werden.

Gleichzeitig wird durch das Bedürfnis nach Energieersparnis und damit Gewichtsersparnis bei der Automobilindustrie gefordert, dass bei gleichzeitig steigenden Fahrkomfort das Fahrzeuggewicht möglichst niedrig liegen soll. Von dieser Entwicklung sind auch Fahrwerkkomponenten, insbesondere auch Radträger, betroffen.

Die Achszapfen für eine Radträgereinheit werden üblicherweise aus Stahl, beispielsweise mit der Werkstoffbezeichnung Cf 53, durch Warmformen (Gesenkschmieden) über mehrere Umformstufen gefertigt und spanend nachbearbeitet.

Zur Verbindung eines Achszapfens mit einem Radträger sind verschiedene Methoden bekannt, beispielsweise das Aufschrauben oder das Einpressen. Dazu muß an geschmiedeten Achszapfen neben der Aufnahmefläche für das Radlager insbesondere die zur Verbindung mit dem Radträger vorgesehene Fläche sehr genau sein, um beispielsweise mit einer am Radträger befindlichen Zentralbohrung eine Presspassung eingehen zu können. Das Verschrauben des Achszapfens mit oder dessen Einpressen in den Radträger stellen insgesamt zusätzliche kosten- und arbeitsintensive Arbeitsgänge dar.

Eine Radträgeranordnung stellt die Verbindung zwischen Rad und Fahrzeugachse her. Sie trägt das Radlager, die Radnabe, die Radbremse und das Rad und dient zur Anlenkung des Stossdämpferbeins.

Bekannte Radträgeranordnungen bestehen aus einem geschmiedeten Achszapfen und einem Schmiedeteil, das über ein rohrförmiges Anschlussstück an die Fahrzeugachse, eine Aufnahme für das Stossdämpferbein und eine Anlagefläche für den Achszapfenflansch verfügt.

Das rohrförmige Anschlussstück des Achszapfen-Schmiedeteils musste bisher innen, aussen und stirnseitig bearbeitet werden, damit eine passgenaue Fügestelle zur Verschweißung mit dem Tragrohr der Fahrzeugachse vorliegt. Eine weitere mechanische Bearbeitung am Schmiedeteil war an der Aufnahme für das Stossdämpferbein erforderlich. Nach der Verschweißung mit dem Tragrohr der Fahrzeugachse wurden am Schmiedeteil durch Überfräsen der Anlagefläche Radvorspur und -sturz eingestellt. Außerdem wurde die Anlagefläche mit Bohrungen für die Anbringung des Achszapfens versehen.

Am geschmiedeten Achszapfen musste neben den Aufnahmeflächen an der Fahrzeugaußenseite insbesondere die Anschlussfläche des Achszapfenflansches mechanisch sehr genau bearbeitet werden. Der Achszapfen wird von der Fahrzeugaußenseite her über den Achszapfenflansch lösbar mit der entsprechenden Anlagefläche des Schmiedeteils verbunden.

Die JP 5221203 (A) schlägt zur Gewichtsreduktion eines Achszapfens und Reduktion der Kosten bei der Herstellung desselben vor, einen geschmiedeten Flansch 2 und eine hohle Welle separat herzustellen und dann Flansch und Schaft miteinander über Einschweißen miteinander zu verbinden. Der so hergestellte Achszapfen wird dann durch Hochfrequenz-Erhitzung gehärtet. Die JP 5221203 lehrt demzufolge, dass einfaches Schmieden des Achszapfens nur durch zweiteilige Herstellung möglich ist.

Achszapfen werden bisher durch Schmieden oder Fließpressen hergestellt. Fließpressen haben zum Füllen und für den Gewichtsausgleich einen Überlauf bis ca. 30 mm.

Bisher waren geschmiedete Achszapfen aufwändig Nachzubearbeiten und waren - bis auf den radseitigen hohlen Kopf - aus schwerem Vollmaterial.

Aufgabe der Erfindung ist es, einen Achszapfen herzustellen, der bei weniger Herstellungsaufwand leicht und beanspruchbar ist. So dass bei geringerem Gewicht und ohne zusätzliche äußere Teile eine hohe Stabilität erreicht wird.

Diese Aufgabe wird erfindungsgemäss durch die Merkmale des Patentanspruches 1. Vorteilhafte Weiterbildungen ergeben sich aus den abhängigen Ansprüchen.

Das Verfahren weist auf: Einbringen eines gewichtsoptimierten Metall-Vormaterials in eine Gesenkgravur; Ausschmieden eines Achszapfenrohlings mit einer Aufweitung und Hohlraum im Kopfbereich in einer geschlossenen Gesenkgravur unter vollständigem Ausfüllen der Gesenkgravur zu einem Achszapfen, und nachfolgendes zumindest einseitiges Dornen entlang der Mittelachse des Achszapfens unter Herstellung einer zentrierten Vertiefung entsprechend der Dornlänge und -form im Achszapfeninneren.

Dadurch, dass nun der gesamte Achszapfen in Schmiedegesenken hergestellt wird, wobei keinerlei Bohr-Schritte oder Reibschweiss-Schritte zum Anfügen von Teilen notwendig sind und aufgrund des präzisen Schmiedeverfahrens eine im wesentlichen nachbearbeitungsfreie Endform erzielt wird, kann ein leichteres Teil mit dünneren Wänden und weniger Material, als bisher möglich, bei gleicher Festigkeit erzielt werden.

Es kann bevorzugt sein, dass der Schaft des Achszapfens für hohe mechanische Belastung Vollmaterial aufweist, das voll ausgeschmiedet wird.

Die Erfindung betrifft ferner Achszapfenbei, denen der Faserverlauf des Achszapfenmaterials im Wesentlichen parallel zur Außenkontur verläuft.

Somit ist aufgrund des durch das Schmiedeverfahrens erzielten günstigen Faserverlaufs eine Gewichtsoptimierung durch Einsatz dünnerer Achszapfenwände bei hoher Stabilität erreichbar.

Alternativ kann der Achszapfen einen hohlen Schaft haben, der durch ein- oder zweiseitiges Dornen in Schmiedeschritten gebildet werden kann.

Es kann günstig sein, wenn im Bereich der Aufweitung des Achszapfens der Schmiederohling - bspw. durch Stauchen - zusätzliches Material enthält, um die Dicke der Rohrwand im aufgeweiteten Bereich einzustellen.

Als Vorteile der Erfindung können genannt werden, dass durch das Zweischritt-Verfahren gemäß der Erfindung Hohlräume in einem geschmiedeten, hochbeanspruchbaren Achskörper erstellt werden können, ohne den Faserverlauf des Schmiedeteils zu stören bzw. dieses zu schwächen. Dabei wird :
ein vollständig ausgeschmiedeter Kopf
ein vollständig ausgeschmiedeter Wellenschaft
ein Im Kopf fast beliebig (abhängig vom Obergesenk) formbarer Hohlraum
ein im Schaft fast beliebig (abhängig von Dornen im Untergesenk) formbarer Hohlraum
oder
eine Durchgangsöffnung (hohler Achszapfen) bspw. durch zweiseitiges Dornen erzielt.

Es ist wesentlich, dass die Ausführung des Achszapfens keineswegs auf spezielle Stahllegierungen beschränkt ist. Es können auch hochfeste Leichtmetall-Legierungen oder faserverstärkte Metalle eingesetzt werden, um die Leistung des Achszapfens an entsprechende Anforderungen anzupassen.

Drei Ausführungsbeispiele der Erfindung, auf welche sie keineswegs eingeschränkt ist, sind in den Zeichnungen dargestellt und werden im Folgenden näher beschrieben. Es zeigen

Fig. 1a einen schematischen Längsschnitt durch einen erfindungsgemässen Achszapfen mit Faserverlauf
Fig. 1b schematisch einen fertiggeschmiedeten Achszapfen mit Hohlraum im Schaft und Faserverfauf
Fig. 1c fertiggeschmiedeter gelochter, hohler Achszapfen
Fig. 2a eine Längsschnitt eines Achszapfenrohlings mit Vollmaterialschaft,
Fig. 2b einen Längsschnitt durch einen Achszapfenrohling mit Hohlraum im Schaft
Fig. 2c einen Längsschnitt durch einen gelochten Achszapfenrohling
Fig. 3 ein Schmiedewerkzeug mit noch darin befindlichem geschmiedetem Achszapfenrohling: und
Fig. 4 das Schmiedewerkzeig mit Dorneinrichtung/en zum Nachdornen/Lochen des fertiggeschmiedeten Achszapfens mit eingelegtem Halbzeug

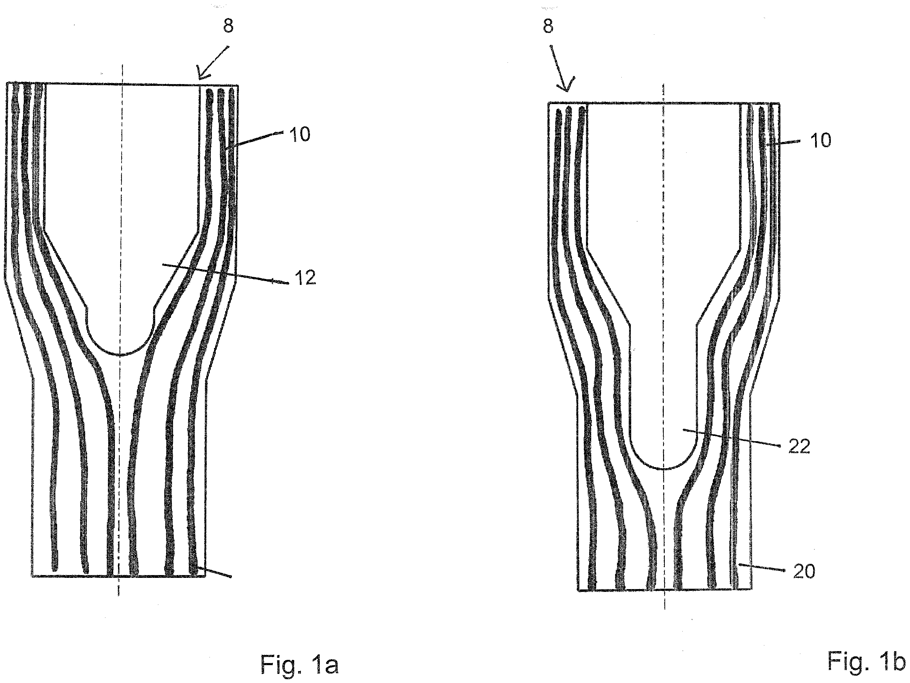

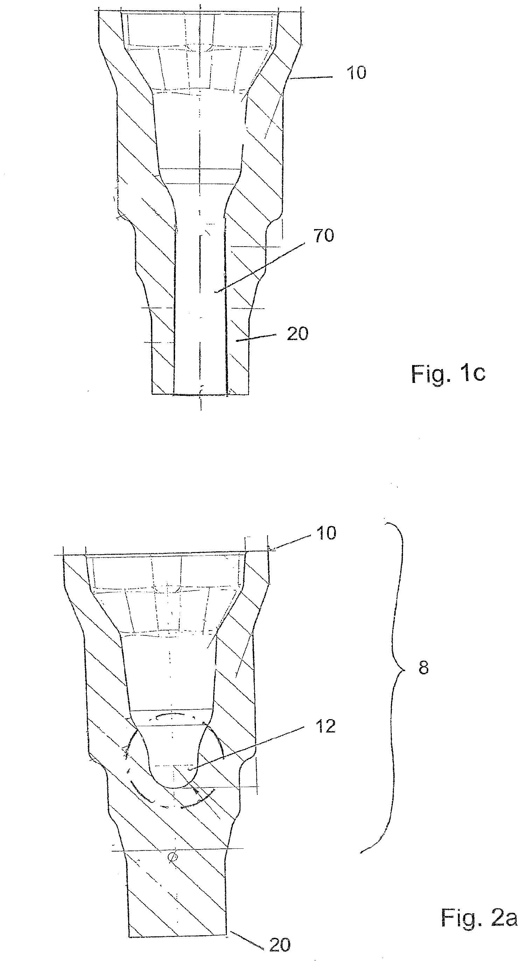

Ein Längsschnitt durch fertiggeschmiedete Achszapfen mit Vollmaterialschaft ist in Fig. 1a gezeigt. Deutlich erkennt man den günstigen, ununterbrochenen Faserverlauf im Schmiedeteil, der zu hoher Festigkeit und Elastizität führt. In Fig. 1b ist ein fertiggeschmiedeter Achszapfen mit Hohlraum im Schaft dargestellt und in Fig. 1c ein fertiggeschmiedeter gelochter Achszapfen.

Dadurch können gegenüber bspw. gebohrten Achszapfen erhebliche Festigkeitsverbesserungen bzw. Gewichtseinsparungen erzielt werden.

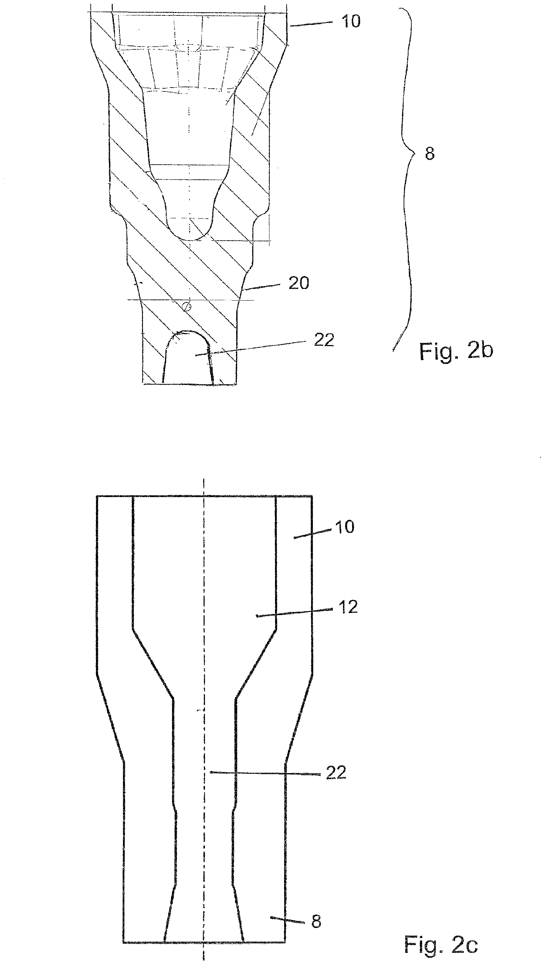

Diese Achszapfen können in 2 Schmiedeschritten hergestellt werden:
Zunächst wird ein Vollmaterialrohling in einem ersten geschlossenen Schmiedegesenk zu einem Achszapfenrohling mit Kalotte/Hohlraum am Kopfbereich 10 und Vollmaterialschaft 20 geschmiedet. Den Achszapfen der Fig. 1a, 1b und 1c entsprechende Achszapfenrohlinge sind in Fig. 2a, 2b und 2c gezeigt.

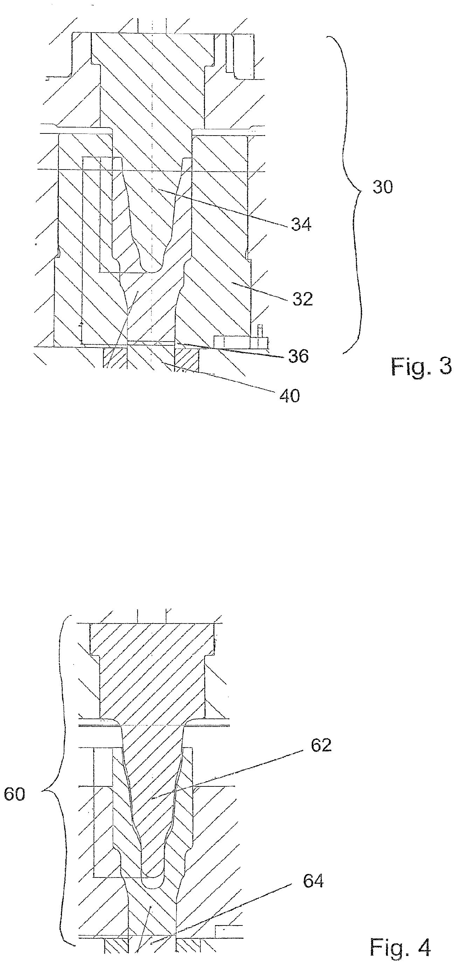

Für den ersten Schmiedeschritt wird das Rohmaterial in ein erstes Schmiedewerkzeug 30, 32 mit Auswerfeinrichtung (en) 40 eingelegt. In Fig. 3 ist das Schmiedewerkzeug schematisch im Längsschnitt mit eingelegtem, bereits verschmiedetem Achszapfenrohling dargestellt. Deutlich ist erkennbar, dass das Schneidewerkzeug eine Werkzeugbüchse 32; einen variablen Auswerfer 40 am Boden 36 sowie einen Verschmiededorn 34 zur Herstellung einer Rohlingskontur mit hohlem Kopfbereich 10 besitzt.

Am Boden weist bei diesem ersten Gesenk das Schmiedewerkzeug 30 einen an sich bekannten Auswerfer 40, der fertiggschmiedete Teil aus der Form heraushebt, auf.

In Fig. 4 ist eine Ausführungsform des Gesenks 60 zum Fertigschmieden gezeigt. Es wird nun eine Dorneinrichtung 62 zum Nachdornen bzw. Lochen des Achsrohlings eingesetzt, welcher die Kalotte im Achszapfenrohlingskopf ausformt und entsprechend den Vorgaben bis zu einer Durchgangsöffnung 70 vertieft. Falls der Rohling gelocht wird, ist eine variable Dorneinrichtung 64 am Gesenkboden dargestellt, welche dann eine Lochmatrize sein kann, wenn der Achszapfenkörper gelocht wird.

Bei allen Ausführungsformen der Erfindung wird ein formgetreuer, nicht durch mechanische umfangreiche spanende Bearbeitung geschwächter Achszapfen erzielt. Dabei kann bei gleicher Festigkeit eine Materialersparnis erzielt werden und das Teil wird leichter, als die bisherigen Teile dieser Art, was zu erheblichen Treibstoffersparnissen im Laufe der Betriebsdauer derartiger Achszapfen in Kraftfahrzeugen bzw. deren Anhänger führt.

Die Achszapfen können nun im Schaftbereich mit an sich bekannten Verfahren mit der Achse verbunden werden, bspw. durch Reibschweissen oder Laserschweissen.

Obwohl die Erfindung anhand bevorzugter Ausführungsbeispiele beschrieben wurde, ist dem Fachmann offensichtlich, dass verschiedenste alternative Ausführungsformen bestehen, so dass der Schutzumfang der Erfindung durch die Ansprüche und nicht durch die spezielle Beschreibung begrenzt ist.

### Bezugszeichenliste

- 8: Achszapfen
- 10: Kopfbereich von 8
- 12: Hohlraum
- 20: Schaft von 8
- 22: Hohlraum im Schaft
- 30: Schmiedewerkzeug
- 32: Werkzeugbüchse
- 34: Verschmiededorn
- 36: Gesenkboden
- 40: Auswerfeinrichtung (en)
- 60: Gesenk zum Fertigschmieden
- 62: Dorneinrichtung
- 64: Dorneinrichtung am Gesenkboden
- 70: Durchgangsöffnung im Achszapfen

## Patentansprüche

1. Verfahren zur Herstellung eines zumindest teilweise hohlen geschmiedeten Achszapfens**, gekennzeichnet durch**:
Einbringen eines gewichtsoptimierten Metall-Vormaterials in ein geschlossenes Schmiedegesenk mit Gesenkgravur mit Werkzeugbüchse und Verschmiededorn;
Ausschmieden des Metall-Vormaterials zu einem Achszapfenrohling mit aufgeweiteter Kalotte auf der Radseite des Achszapfens, und
nachfolgendes Nach-Dornen entlang der Mittelachse des Achszapfens unter Herstellung einer zentrierten Vertiefung entsprechend der Dornlänge und -form im Achszapfeninneren.

2. Verfahren nach Anspruch 1, **dadurch gekennzeichnet, dass** das Nach-Dornen eine Vertiefung der Radanschlusses in Richtung Achszapfenschaft bewirkt.

3. Geschmiedeter einteiliger Achszapfen (8), hergestellt nach einem Verfahren nach Anspruch 1 oder 2, mit einem vergrösserten hohlen Kopfbereich (10) und einem Schaft (20), **dadurch gekennzeichnet, dass** der Faserverlauf des Achszapfenmaterials im wesentlichen parallel zur Aussenkontur verläuft und der Achszapfen (8) mindestens einen Hohlraum (12) im Kopfbereich (10) mit Ausdehnung in den Schaftbereich auswählbarer Grösse aufweist.

4. Geschmiedeter einteiliger Achszapfen nach Anspruch 3, **dadurch gekennzeichnet, dass** der Hohlraum (12) im Kopfbereich in einer Durchgangslochung (70) mündet.
